# EUROPEAN PATENT APPLICATION

(11) **EP 4 799 903 A1**
(43) Date of publication of application: **02.09.2026**
(21) Application number: 25225074.1
(22) Date of filing: 18.12.2025
(51) Int. Cl.: B62B 3/06, B62B 5/00, B66F 9/075

(54) **BATTERY SYSTEMS AND METHODS FOR A MATERIAL HANDLING VEHICLE**

(30) Priority: 18.12.2024 US 202463735768 P
(71) Applicant: The Raymond Corporation, Greene, NY 13778 (US)
(72) Inventor: YAHNER, Joseph T., Chenango Forks (US)
(74) Representative: Zacco Sweden AB

(57) **Abstract**

A material handling vehicle (100) can include a vehicle body (102), a powertrain (110) arranged within the vehicle body (102), a load support (130) extending from the vehicle body (102) to support a load, and a battery (150) arranged within the load support (130) to provide electrical power to the powertrain (110) of the material handling vehicle (100).

## Description

### CROSS-REFERENCE TO RELATED APPLICATIONS

This application claims the benefit of and priority to U.S. Provisional Patent Application No. 63/735,768 filed December 18, 2024, the entirety of which is incorporated by reference herein.

### BACKGROUND

Material handling vehicles can include various types of batteries used to power the material handling vehicle to perform one or more work functions. Typically, the batteries can be arranged within a tractor portion of the material handling vehicle, which may reduce the space available to an operator. Further, the batteries may need to be removed by an operator for recharging or replacing, which can cause downtime for the material handling vehicle.

### SUMMARY

According to one aspect of the present disclosure, a material handling vehicle can include a vehicle body, a powertrain arranged within the vehicle body, a load support extending from the vehicle body to support a load, and a battery arranged within the load support, the battery to provide electrical power to the powertrain of the material handling vehicle.

In some examples, the load support can include a fork extending away from the vehicle body.

In some examples, the fork can define a cavity configured to receive and secure the battery.

In some examples, the material handling vehicle can further include a cover configured to slide over the fork to selectively enclose the cavity.

In some examples, the load support can include a pair of laterally-spaced forks extending away from the vehicle body.

In some examples, the material handling vehicle can further include a casing configured to slide over the forks to form a platform to support a load.

In some examples, the battery can be arranged within the casing between the forks of the material handling vehicle.

In some examples, each of the pair of forks can define a cavity configured to receive and secure a first battery and a second battery, respectively.

In some examples, the first and second batteries can be connected via a bus bar to form a battery assembly.

In some examples, the battery can be a lithium-ion type battery.

According to another aspect of the present disclosure, a method of replacing a battery for a material handling vehicle can include providing a material handling vehicle, the material handling vehicle including a vehicle body, a powertrain within the vehicle body, a load support extending from the vehicle body, and the load support including one or more forks, removing a first battery from within the load support, the first battery having a first charge level, installing a second battery within the load support, the second battery having a second charge level that is greater than the first charge level of the first battery, and establishing an electrical connection between the powertrain and the battery to power the material handling vehicle.

In some examples, the load support can include a casing that is configured to receive and secure the battery.

In some examples, the casing can be configured to at least partially cover the one or more forks.

In some examples, the method can further include, before removing the first battery within the casing, removing a cover away from the casing, wherein the cover is configured to directly support a load.

In some examples, installing the second battery can include one or more of sliding a casing over the one or more forks, the casing including the second battery, or installing a second set of forks on the material handling vehicle, the second battery integrated into the second set of forks.

According to yet another aspect of the present disclosure, a load support assembly for a material handling vehicle can include a pair of forks configured to extend from a vehicle body of the material handling vehicle, a casing configured to at least partially cover the pair of forks, the casing including a pair of channels extending longitudinally, each channel configured to receive and at least partially enclose a respective one of the pair of forks, and a cavity positioned between the pair of channels and configured to receive one or more batteries providing power to the material handling vehicle, and a cover configured to be supported on the casing over the cavity.

In some examples, the cover can be configured as a load-bearing surface to support a load during material handling operations of the material handling vehicle.

In some examples, the cavity can extend longitudinally and open upwardly to receive the one or more batteries.

In some examples, the casing can be configured to be removably positioned over the pair of forks.

In some examples, the one or more batteries can be removable from the cavity, or the casing including the one or more batteries and the cover can be removable as an assembly from the pair of forks.

The foregoing and other aspects and advantages of the present disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the present disclosure.

### BRIEF DESCRIPTION OF THE DRAWINGS

The accompanying drawings, which are incorporated in and form a part of this specification, illustrate embodiments of the disclosed technology and, together with the description, serve to explain the principles of embodiments of the disclosed technology:
FIG. 1 is a perspective view of an example material handling vehicle according to aspects of the present disclosure.
FIG. 2 is a diagrammatic view of a material handling vehicle according to aspects of the present disclosure.
FIG. 3 is a diagrammatic view of an example material handling vehicle according to aspects of the present disclosure.
FIG. 4 is a diagrammatic view of another example material handling vehicle according to aspects of the present disclosure.
FIG. 5 is a diagrammatic view of yet another example material handling vehicle according to aspects of the present disclosure.
FIG. 6 is a perspective view of a material handling vehicle according to aspects of the present disclosure.
FIG. 7 is a perspective view of the material handling vehicle of FIG. 4, with a top cover of a battery system assembly removed.
FIG. 8 is a front cross-sectional view of the material handling vehicle taken along line "8-8" of FIG. 4.
FIG. 9 is an exploded view of the battery system assembly of the material handling vehicle of FIG. 4.

### DETAILED DESCRIPTION

The following discussion is presented to enable a person skilled in the art to make and use embodiments of the disclosed technology. Given the benefit of this disclosure, various modifications to the illustrated embodiments will be readily apparent to those skilled in the art, and the principles herein can be applied to other embodiments and applications without departing from embodiments of the disclosed technology. Thus, embodiments of the disclosed technology are not intended to be limited to embodiments shown but are to be accorded the widest scope consistent with the principles and features disclosed herein.

The following detailed description is to be read with reference to the figures, in which like elements in different figures have like reference numerals. The figures, which are not necessarily to scale, depict selected embodiments and are not intended to limit the scope of embodiments of the disclosed technology. Skilled artisans will recognize the examples provided herein have many useful alternatives and fall within the scope of embodiments of the disclosed technology.

Before any embodiments of the disclosed technology are explained in detail, it is to be understood that the disclosed technology is not limited in its application to the details of construction and the arrangement of components set forth in the following description or illustrated in the following drawings. The disclosed technology is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

It is also to be appreciated that material handling vehicles are designed in a variety of classes and configurations to perform a variety of tasks. It will be apparent to those of skill in the art that the present disclosure is not limited to any specific material handling vehicle, and can also be provided with various other types of material handling vehicle classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the present disclosure is not limited to material handling vehicles applications. Rather, the present disclosure may be provided for other types of vehicles, such as automobiles, buses, trains, tractor-trailers, farm vehicles, factory vehicles, and the like.

It should be noted that the various material handling vehicles listed above may perform a variety of load handling functions. For example, the material handling vehicles or the load handling portion (e.g., forks, mast, or fork carriage, etc.) of the material handling vehicles may be operated to traverse (e.g., move the forks up to a maximum load height), tilt, reach (e.g., move the forks up to a maximum load depth), rotate, drive (e.g., move the material handling vehicles), travel (e.g., move the material handling vehicles), or any combination thereof to complete a load handling function.

As should be noted, for certain types of vehicles there are training requirements imposed by various government agencies, laws, rules and regulations. For example, OSHA imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

Material handling vehicles can include a battery (e.g., a lithium-ion battery) or other electric power source that delivers power to various parts of the material handling vehicle to perform different work functions. For example, the battery can be integrated into a main body (e.g., a tractor) of the material handling vehicle or in a battery compartment dedicated to storing the battery or other related components. Accordingly, a size of a battery can be determined based the size of the main body of the material handling vehicle or the battery compartment. Additionally or alternatively, due to the space required for the battery, the battery can limit space available for an operator or other components needed for operation of a material handling vehicle. In this case and others, it may be desirable to provide a larger battery or a battery with an increased charging capacity, for example, without a size restriction.

Further, under conventional approaches, when stored energy of a battery is low, an operator may need to transport a material handling vehicle to a charging station to recharge the battery or swap out a depleted battery pack for a more fully charged replacement. For example, an operator may need to manually remove the battery from a battery compartment of the material handling vehicle and transport the battery to the charging station. Thus, it may be desirable to provide a battery in a location that is more easily accessible for replacement or recharging or on a support assembly for a more efficient replacement or recharging.

Examples of the disclosed technology can provide improvements in this regard, and various others as further detailed below. In particular, some examples of the disclosed technology can provide configurations of a battery and associated support structures that permit the battery to be easily exchanged with another battery. Some configurations of a battery and associated support structures can permit for an increased surface area of the battery, thus increasing charging capacity and/or efficiency of the battery. For example, the battery can be integrated into one or more forks of the material handling vehicle. In some cases, the battery can be removably attached to forks (e.g., within a designated cavity), or the forks including the battery can be removably attached to the material handling vehicle.

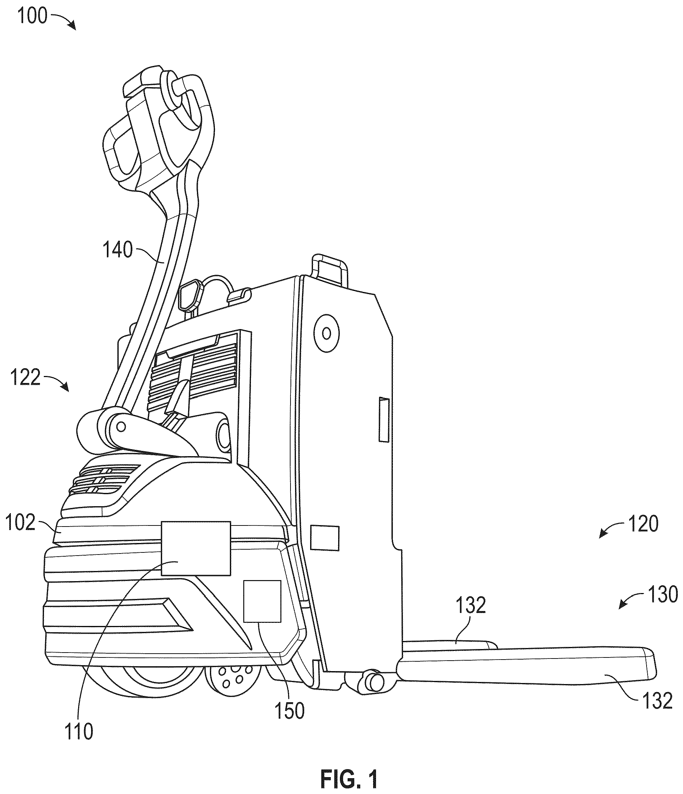

Referring to FIG. 1, an example material handling vehicle 100 is shown, in accordance with some aspects of the disclosure. In the example of FIG. 1, the material handling vehicle 100 is a pallet mover. However, in other examples, the material handling vehicle 100 may be a forklift, orderpicker, automated guided vehicle (AGV), or any other known material handling vehicle. The material handling vehicle 100 can include a vehicle body 102 (e.g., a tractor), a powertrain 110 (e.g., a motor, engine, etc.) arranged within the vehicle body 102, a load support 130 that includes one or more forks 132 extending from the vehicle body 102 toward a front side 120, and a control arm 140 (e.g., for controlling movement of the material handling vehicle 100) positioned toward a rear side 122. In some examples, the powertrain 110 may, in addition to a motor, include various power electronics, a controller, or other components for operating the material handling vehicle 100. In some examples, the forks 132 of the load support 130 may be used to support loads (e.g., pallets). However, in other examples, the load support 130 may be used to support different types of loads (e.g., boxes, containers, etc.).

In some examples, the material handling vehicle 100 may include a power source 150 integrated into the material handling vehicle. The power source 150 may be configured to provide power to the material handling vehicle (e.g., to power the powertrain, controllers, display(s), etc.). In some examples, the power source 150 may be one or more of various modular industrial battery configurations described below. For example, the battery can be a lithium-ion battery, zinc-ion battery, a solid-state battery, aluminum-ion battery, or a redox flow battery, although different types of electric battery sources are possible. Further, the material handling vehicle 100 may include a battery compartment in the material handling vehicle 100 that can include terminals, ports, wiring, and other components for connecting an industrial battery to the material handling vehicle 100. Depending on the type and configuration of material handling vehicle, battery compartments can be provided in a variety of locations and configurations. For example, the battery compartment may be provided within the load support 130 (e.g., within the forks 132), such that the battery is arranged within the load support 130. In some examples, the battery may be removably positioned within the battery compartment(s) to permit an operator to remove, exchange, or charge the battery.

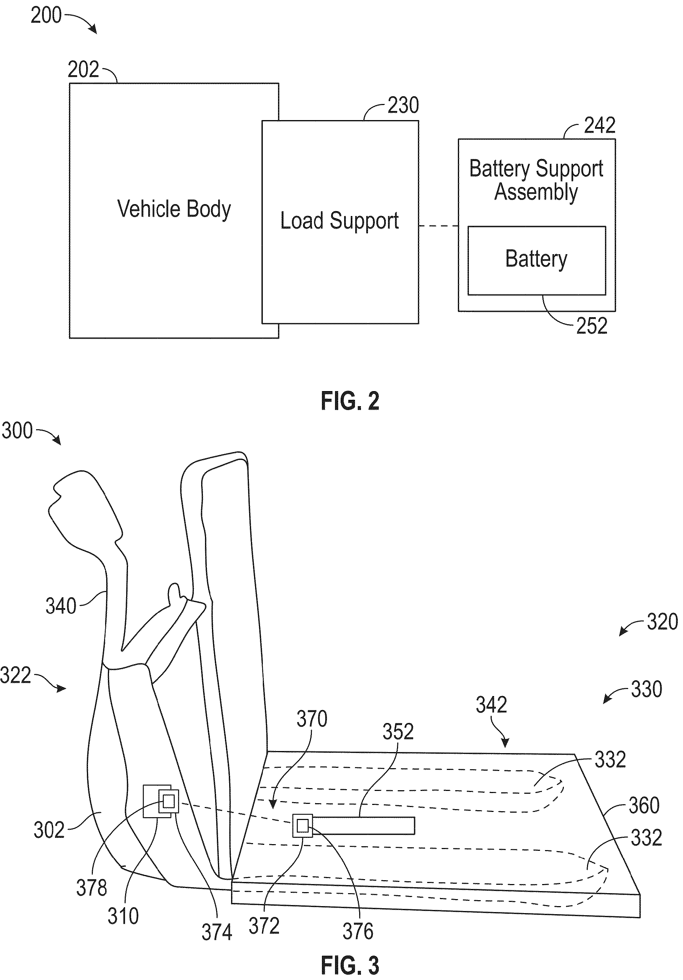

FIG. 2 illustrates an example material handling vehicle 200, which is one particular example of the material handling vehicle 100 of FIG. 1, where the examples discussed below can be advantageously employed. To that end, features of the material handling vehicle 200 described below include similar numerals and names that are generally similar to those used in FIG. 1 and discussion of above applies to similar numerals and names unless otherwise noted or required. For example, the material handling vehicle 200 is described as having a vehicle body 202, just as the material handling vehicle 100 includes the vehicle body 102.

In particular, the material handling vehicle 200 includes a load support 230 (e.g., a load support assembly) that is supported by the vehicle body 202. As discussed above, the load support 230 can include forks or other types of structures that support external loads (e.g., pallets). The load support 230 can be configured to support a power source (e.g., similar to the power source 150 of FIG. 1) that is configured as a battery 252 or a battery pack (e.g., a lithium-ion battery, zinc-ion battery, a solid-state battery, aluminum-ion battery, or a redox flow battery, etc.) in various configurations. In some examples, the battery 252 can be supported on the load support 230 using a separate battery support assembly 242 that is integrated into the load support 230. The battery support assembly 242 can include various structures that house the battery 252, such as mounting structures or internal cavities that are configured to support the battery 252 on or within the battery support assembly 242.

For example, the battery 252 can be at least partially or fully enclosed within the battery support assembly 242, which can then be attached to the load support 230. Alternatively, in some examples, the battery 252 can be directly integrated into the load support 230 itself without a separate battery support assembly. For example, the load support 230 can include one or more forks (e.g., similar to the forks 132), and the battery 252 (e.g., a plurality of batteries or one or more batteries) can be positioned within cavities formed in the forks 132 or within other structural elements of the load support 230, such that the battery 252 is arranged within the load support 230. In some examples, integrating the battery 252 into the load support 230 can help save space on the material handling vehicle 200 for improved or compact packaging of various vehicle components. In some examples, the load support 230 can extend forward from the vehicle body 202, such that supporting the battery 252 on the load support 230 can help distributing the weight of the material handling vehicle 200.

Further, the battery 252 can be mounted on the load support 230 or integrated into the load support 230 in various ways to provide operational flexibility. For example, the load support 130 can include interfaces that can structurally or operatively (e.g., electrically) connect with the battery 252, such that the battery 252 can provide power to the material handling vehicle 200 when the battery 252 is installed and connected to the load support 230. In some examples, the battery 252 can be removably or fixedly attached to the load support 230. Thus, the load support 230 can be disengaged from the vehicle body 202, or the battery 252 can be disengaged from the load support 230, to recharge the battery 252 or be exchanged for a more fully charged battery. Accordingly, the battery 252 can be more accessible to an operator for recharge or replacement.

The load support 230 can support various shapes and sizes of the battery 252. For example, providing a particular configuration of the battery 252 can be more flexible without being limited by a compact space (e.g., within the vehicle body 202). Accordingly, dimensions or shapes of the battery 252 can be adjusted to enhance performance (e.g., provide an increased surface area for battery cooling), increase energy density, or decrease charging frequency of the battery 252. In some cases, providing the battery 252 in a less enclosed space can enhance thermal regulation of the battery 252 and decrease internal resistance of the battery 252. Thus, a current-carrying capacity of the battery 252 can be improved, and the battery can deliver power to the material handling vehicle 100 more effectively.

Further, a surface area or a volume of the battery 252 can be adjusted to increase overall performance of the battery 252. For example, a shape of the battery 252 can substantially correspond to a shape of the load support 130 (e.g., including the forks 132) along one or more directions. For example, the battery 252 can include an elongated profile along a length of the battery 252 (e.g., as measured in a direction between a front side of the material handling vehicle 200 and a rear side of the material handling vehicle 200), similar to an elongated profile of the load support 230 along a length of the load support 130. In some cases, increasing a surface area of the battery 252 can increase reaction sites for electrochemical reactions and improve a charge capacity of the battery 252.

Further, arranging the battery 252 on the load support 230 or within an internal space of the load support 130 can increase availability of space in the vehicle body 202. Accordingly, packaging of various features or elements of the material handling vehicle 200 can be improved in the vehicle body 202, and the vehicle body 202 can accommodate additional elements in some examples.

FIG. 3 illustrates another example material handling vehicle 300, which is one particular example of the material handling vehicle 100 of FIG. 1 and the material handling vehicle 200 of FIG. 2, where the examples discussed below can be advantageously employed. To that end, features of the material handling vehicle 300 described below include similar numerals and names that are generally similar to those used in FIGS. 1 and 2 and discussion of above applies to similar numerals and names unless otherwise noted or required. For example, the material handling vehicle 300 is described as having a vehicle body 302 and a control arm 340, just as the material handling vehicle 100 includes the vehicle body 102 and the control arm 140.

In the illustrated example, the material handling vehicle 300 includes a load support 330 having forks 332 that extend from the vehicle body 302 toward a front side 320. The vehicle body 302 is positioned at a rear side 322. In some examples, the load support 330 can be configured to support a battery 352 using a battery support assembly 342 that is integrated into the load support 330, similar to the battery support assembly 242 described with respect to FIG. 2. In particular, the battery support assembly 342 can include a casing 360 (e.g., a sleeve) that can be provided over the forks 332, for example, to provide at least partial protection or enclosure over the forks 332. Further, the casing 360 can be configured as a structural member and provide a platform for use in material handling operations (e.g., stacking boxes, containers, etc.) to support a load. In some examples, the casing 360 may be configured to house the battery 352 that can be operatively connected to the load support 330 to provide power to a powertrain 310 or other components of the material handling vehicle 300. In some examples, the casing 360 can be removably positioned (e.g., slid) over the forks 332. In some examples, the casing 360 can include openings or access panels that provide access to the battery 352 for maintenance or replacement, without requiring removal of the entire casing 360 from the forks 332. In some examples, the casing 360 can include a vent for releasing gas from the battery 352.

While the illustrated example shows the battery 352 positioned between the forks 332, the battery 352 can be positioned at other locations within the casing 360. For example, the casing 360 can extend farther forward beyond distal ends of the forks 332, such that the battery 352 can be positioned forward of the tips of the forks 332. In some examples, the battery 352 can be arranged within the casing 360 between the forks 332 of the material handling vehicle 300. In some examples, the battery 352 can be positioned along a bottom wall of the casing 360, which can help lowering the center of gravity of the material handling vehicle 300. In some examples, multiple batteries can be positioned in multiple discrete locations within the casing 360, for example, a first battery module near a proximal end of the casing 360 (e.g., closer to the vehicle body 302) and a second battery module near a distal end of the casing 360 (e.g., farther from the vehicle body 302). In some examples, multiple batteries can be positioned within the casing 360 in a stacked arrangement, such as vertically stacked (e.g., on top of each other) or horizontally stacked (e.g., side by side), for example, to optimize energy storage capacity within the available space.

In some examples, the battery 352 can be positioned at various locations within the casing 360 to optimize weight distribution, accessibility, or thermal management. For example, the battery 352 can be positioned along a bottom surface of the casing 360, which may help lower the center of gravity of the material handling vehicle 300. In some cases, the battery 352 can be positioned along a top surface of the casing 360, which may facilitate easier access for removal or replacement operations. In some examples, the battery 352 can be positioned along one or more side walls of the casing 360, which may allow for a more distributed weight configuration. In some cases, the battery 352 can be positioned in a central region of the casing 360, which may provide balanced weight distribution between the forks 332. In some examples, the battery 352 can be positioned in multiple discrete locations within the casing 360, such as having a first battery portion near a proximal end of the casing 360 (e.g., closer to the vehicle body 302) and a second battery portion near a distal end of the casing 360 (e.g., farther from the vehicle body 302). In some cases, the battery 352 can be positioned in a stacked arrangement within the casing 360, with multiple battery modules arranged vertically to maximize energy storage capacity within a given footprint.

In some cases, in order to facilitate recharging of the battery 352, the casing 360 or the battery 352 can be replaced with a different casing that includes a replacement battery. Thus, an operator may maneuver the material handling vehicle 300 to a charging dock, remove the casing 360 and the battery 352, and replace the casing 360 with a casing that includes a replacement (fully charged) battery. In some cases, rather than removing and replacing the casing 360, the casing 360 can be plugged into an external power source to recharge the battery 352. Further, in other examples, the casing 360 may be positioned adjacent to or on a wireless charging pad to facilitate wireless charging of the battery 352. While the illustrated example shows one battery, different configurations can include more than one battery (e.g., two, three, four, five, etc.).

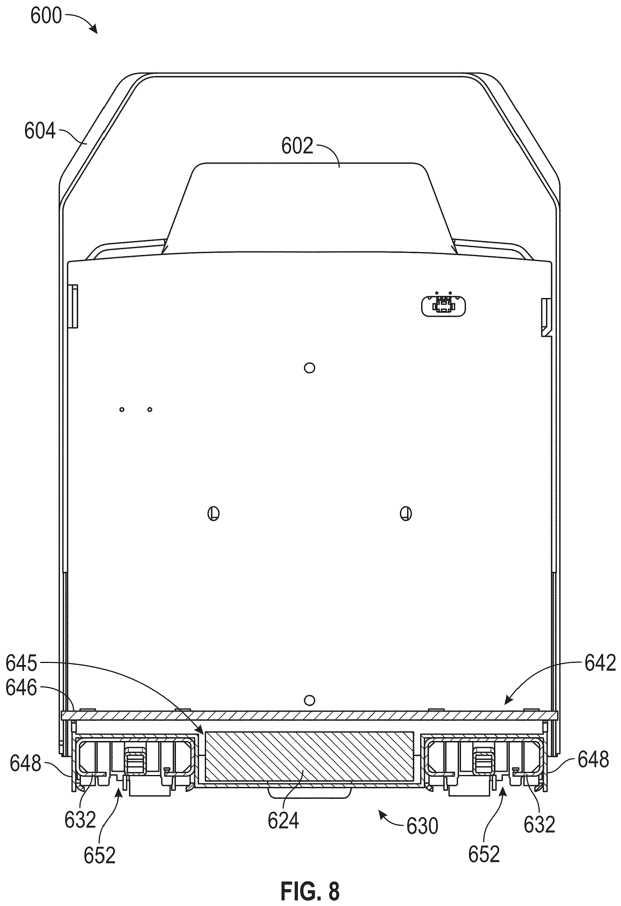

In some cases, the casing 360 can be made from a rigid material that reinforces rigidity of the forks 332 or a flexible material that fits around the forks 332. In some cases, the casing 360 can be configured to at least partially cover the forks 332. In some cases, the material handling vehicle 300 can include an electrical connector port interface 370 to establish an electrical connection between the battery 352 and the powertrain 310 (or other electrical components of the material handling vehicle). For example, the electrical connector port interface 370 can include a first connector 372 (e.g., male or female connector) on the casing 360 and a second connector 374 within the vehicle body 302 (e.g., adjacent the powertrain 310). When the casing 360 is installed on the load support 330 or slid over the forks 332, the first connector 372 can align and engage with the second connector 374 to establish both a structural attachment and an electrical connection between the battery 352 and the powertrain 310. In some examples, after the casing 360 is installed over the forks 332, the battery 352 can be inserted into the casing 360. In some examples, the first connector 372 can include a first terminal 376, and the second connector 374 can include a second terminal 378. Accordingly, the first terminal 376 can engage with corresponding second terminal 378 so that power can be transmitted from the battery 352 to the powertrain 310. In some examples, the first connector 372 can be integrated into the battery 352, or the casing 360 can include integral electrical connections to the battery 352 such that when the battery 352 is positioned within the casing 360, the battery 352 is electrically coupled to the first connector 372. In some examples, the battery 352 can include a separate set of connectors and terminals that engage with the corresponding set of connectors and terminals of the casing 360 to establish an electrical connection between the battery 352 and the casing 360. In some examples, the second connector 374 can be provided on other portions of the material handling vehicle 300, such as the forks 332. In some examples, wires can be provided to establish electrical connection between the battery 352 and the first connector 372, or between the powertrain 310 and the second connector 374. Similar considerations apply for other examples discussed above and below, including relative to FIGS. 1, 2, and 4-9.

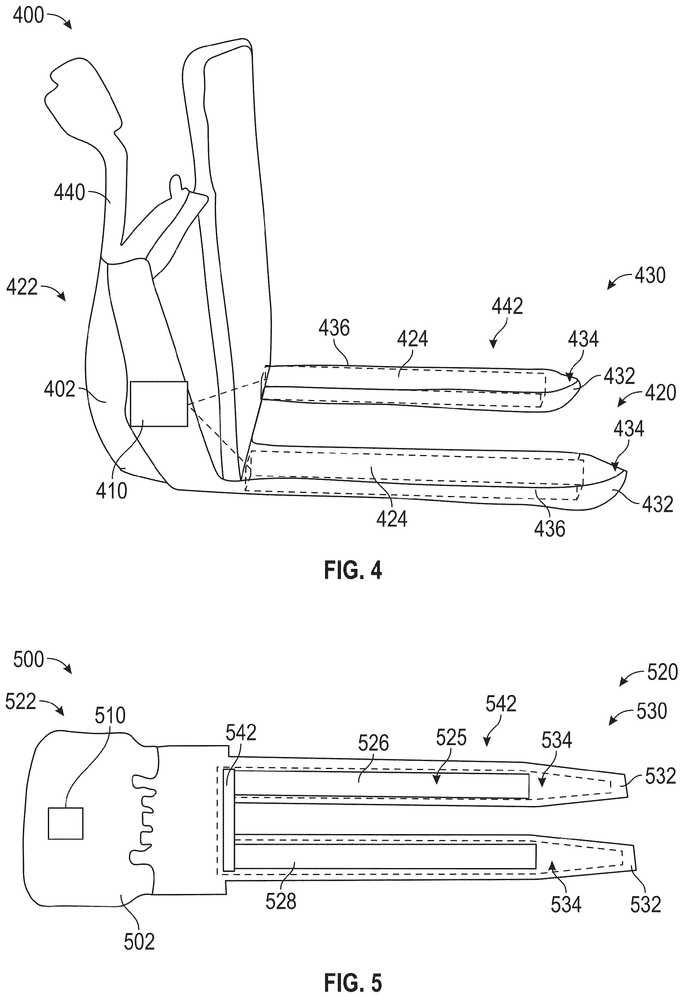

FIG. 4 illustrates another example of a material handling vehicle 400, as another example configuration of the material handling vehicle 100 of FIG. 1, the schematically-illustrated arrangement of FIG. 2, or the material handling vehicle 300. As will be recognized, the material handling vehicle 400 shares a number of components in common with and operates in a similar fashion to the examples illustrated and described previously (e.g., the material handling vehicle 300). For the sake of brevity, these common features will not be again described below in detail. Rather, previous discussion of commonly named or numbered features, unless otherwise indicated, also applies to example configurations of the material handling vehicle 400.

In the illustrated example, the material handling vehicle 400 includes one or more forks 432 of a load support 430 that extend from a vehicle body 402 toward a front side 420 of the material handling vehicle 400, and a control arm 440 extending from the vehicle body 402 to provide operator control functionality at a rear side 422 of the material handling vehicle 400. In some examples, the material handling vehicle 400 can include a battery support assembly 442 that is integrated into the load support 430. For example, the forks 432 may define cavities 434 along a longitudinal length of the forks 432, as measured in a direction between the front side 420 and the rear side 422. The cavities 434 can be shaped to support one or more batteries 424. Thus, when the batteries 424 are installed within the cavities 434 of the forks 432, the batteries 424 can provide power to the material handling vehicle 400 (e.g., to a powertrain 410 of the material handling vehicle 400). In particular, the forks 432 can include electrical terminals or connectors that engage with corresponding terminals on the batteries 424 when installed. While the illustrated example shows rectangular cavities that generally correspond to a shape of the batteries 424, the cavities 434 or the batteries 424 can be differently shaped, including triangularly, ovularly, circularly, polygonally, etc. Further, more than one battery can be provided in the corresponding fork (e.g., two, three, four, five, etc.) in a side-by-side or a vertically stacked configuration.

In some examples, the forks 432 can be manufactured with the cavities 434 defined by one or more walls of the forks 432 during a manufacturing process, such that the cavities 434 can define hollow interior spaces within the forks 432. In some cases, the cavities 434 may be fully enclosed within the forks 432, with access provided through removable panels or covers. In other cases, the cavities 434 may be open along one or more sides of the forks 432, such as along a top surface, a bottom surface, or a lateral side surface, to facilitate insertion and removal of the batteries 424, or to allow for thermal management or electrical connections to the batteries 424.

In some examples, in order to cover the cavities 434, the forks 432 can include a removable cover 436 that can cover or encapsulate the batteries 424 within the cavities 434. In some cases, the cover 436 can be configured to slide over the forks 432 (e.g., longitudinally along the forks 432 or laterally from one or more sides of the forks 432) to selectively enclose the cavities 434. In some examples, the cover 436 can be hingedly attached, snap-fitted, magnetically secured, or fastened with quick-release latches. In some cases, the batteries 424 can be individually removed from or installed into the corresponding forks 432. In some examples, the batteries 424 can be positioned within the cavities 434 by resting on a bottom surface, suspended from side walls, or secured to cavity walls, and can be retained via clips, friction fit, guide rails, mounting brackets, or the cover 436. In some cases, the batteries 424 can be secured within the forks 432 (e.g., installed during manufacturing of the material handling vehicle 400) via various methods of attachment, such as fasteners, magnets, welds, adhesives, as non-limiting examples. Further, in some examples, the cavities 434 or the cover 436 can include sealing features such as gaskets, seals, or protective coatings to protect the batteries 424 from moisture, dust, or debris.

In some cases, the forks 432 can be removably coupled to the vehicle body 402 to establish structural and operational connection between the batteries 424 and the material handling vehicle 400. Accordingly, the forks 432 can be swapped with other forks with more fully charged batteries as desired. Thus, the batteries 424 may not need to be removed from or transported out of the forks 432. Rather, operators can maneuver the material handling vehicle 400 to a charging station, drop the forks 432 with more depleted batteries, and install (e.g., pick up, insert, etc.) different forks with more fully charged batteries. In some cases, the forks 432 can be individually or selectively swapped for replacement forks with replacement batteries. In some examples, installing a second set of forks on the material handling vehicle 400 can include integrating a second battery into the second set of forks.

FIG. 5 illustrates another example of a material handling vehicle 500, which is one particular example of the material handling vehicle 100 of FIG. 1, the schematically-illustrated arrangement of FIG. 2, the material handling vehicle 300 of FIG. 3, or the material handling vehicle 400 of FIG. 4. As will be recognized, the material handling vehicle 500 shares a number of components in common with and operates in a similar fashion to the examples illustrated and described previously (e.g., the material handling vehicles 300, 400). For the sake of brevity, these common features will not be again described below in detail. Rather, previous discussion of commonly named or numbered features, unless otherwise indicated, also applies to example configurations of the material handling vehicle 500.

In some examples, the material handling vehicle 500 and the material handling vehicle 400 may differ. For example, the material handling vehicle 500 can include a vehicle body 502 at a rear side 522, a powertrain 510, and a load support 530 that includes forks 532 extending from the vehicle body 502 toward a front side 520. The load support 530 can include a pair of laterally-spaced forks 532 extending away from the vehicle body 502. The forks 532 can define cavities 534 configured to receive batteries, similar to the cavities 434 of the material handling vehicle 400. In some examples, each of the pair of forks 532 can define a cavity 534 configured to receive and secure a first battery 526 and a second battery 528, respectively. However, in the material handling vehicle 500, a battery support assembly 542 may include a battery assembly 525 having a bus bar 544 extending between the first battery 526 and the second battery 528 in order to electrically connect the first battery 526 to the second battery 528. In some examples, the first battery 526 and the second battery 528 can be connected via the bus bar 544 to form the battery assembly 525. Accordingly, the first battery 526 and the second battery 528 can collectively provide power to the powertrain 510 of the material handling vehicle 500. Further, the first battery 526 and the second battery 528 may be removed from or secured to the forks 532 of the material handling vehicle 500 simultaneously as part of the battery assembly 525.

In some examples, the cavities 534 may be provided along an underside of the load support 530. In some cases, the battery assembly 525 can be picked up (e.g., from a ground support) and positioned within the cavities 534 from below. In some cases, the cavities 534 can be approached from above or upon removal of one or more covers from the forks 532. In some cases, the battery assembly 525 can be laterally slid into the cavities 534 along the forks 532.

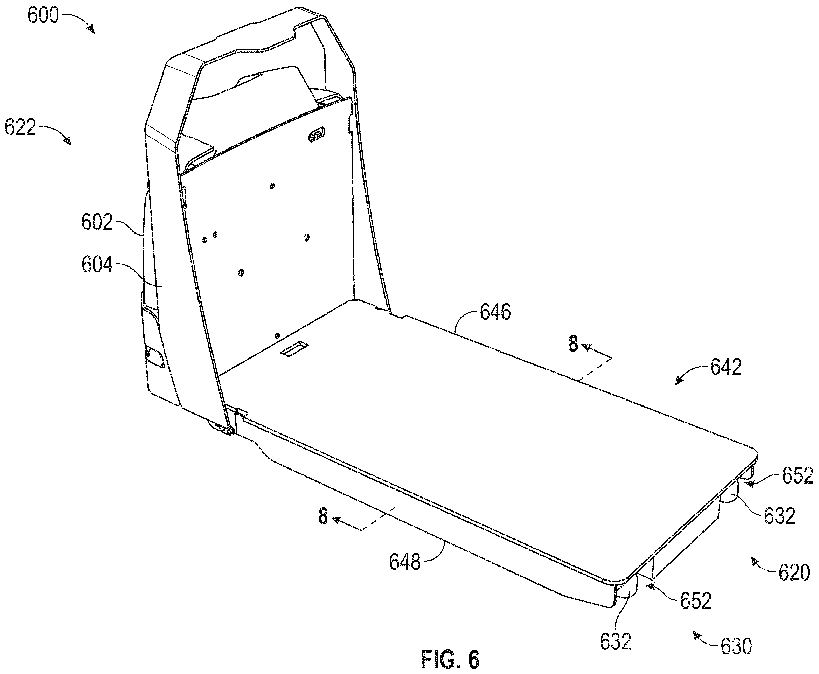

FIGS. 6-9 illustrate another example of a material handling vehicle 600, which is one particular example of the material handling vehicle 100 of FIG. 1, the schematically-illustrated arrangement of FIG. 2, the material handling vehicle 300 of FIG. 3, the material handling vehicle 400 of FIG. 4, or the material handling vehicle 500 of FIG. 5. As will be recognized, the material handling vehicle 600 shares a number of components in common with and operates in a similar fashion to the examples illustrated and described previously (e.g., the material handling vehicles 100, 200, 300, 400, 500). For the sake of brevity, these common features will not be again described below in detail. Rather, previous discussion of commonly named or numbered features, unless otherwise indicated, also applies to example configurations of the material handling vehicle 600.

In the illustrated example, the material handling vehicle 600 includes a vehicle body 602 positioned at a rear side 622 and a load support 630 (e.g., a load support assembly) extending from the vehicle body 602 toward a front side 620. A bracket 604 can extend upward from the vehicle body 602 and can provide structural support for the material handling vehicle 600 and an operator for maneuvering or controlling the material handling vehicle 600. The load support 630 includes forks 632 that extend along left and right lateral sides of the material handling vehicle 600 to support pallets or other loads. In some examples, the load support 630 can include a pair of laterally-spaced forks 632 extending away from the vehicle body 602. The forks 632 can be positioned to provide structural support for the load support 630 and can define an overall framework for supporting various battery components as described below.

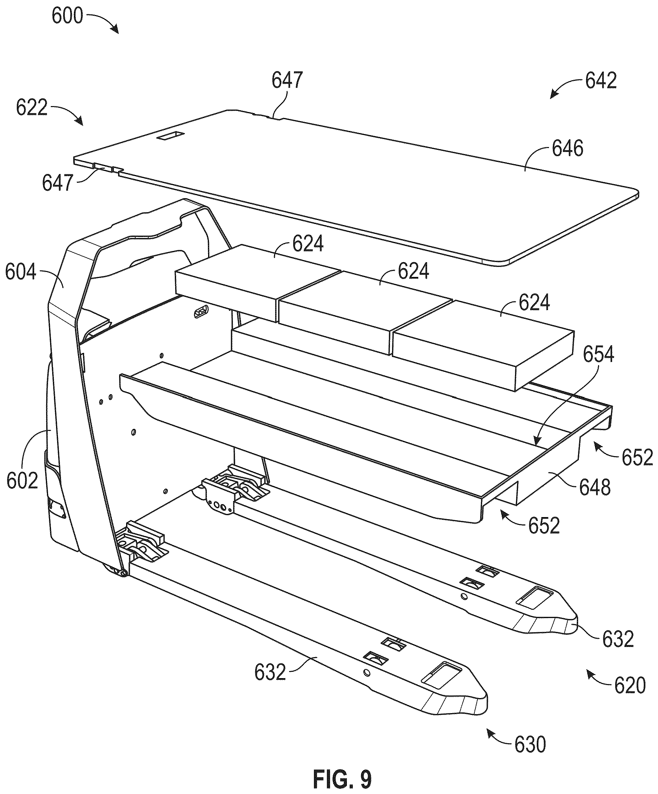

In particular, the load support 630 includes a battery support assembly 642 that supports a plurality of batteries 624 (e.g., one or more batteries) on the forks 632. The battery support assembly 642 includes a top cover 646 and a casing 648 that houses the batteries 624. In the illustrated example, the top cover 646 can be positioned between lateral sides of the bracket 604. The top cover 646 can be configured as a removable component that selectively provides access to one or more interior compartments of the casing 648. For example, as shown in FIG. 9, the top cover 646 can include notches 647 that align with the bracket 604 when the top cover 646 is supported on the casing 648 (e.g., along rims of the casing 648). The top cover 646 can be rested on the casing 648 or secured to the vehicle body 602 or the bracket 604 via sliding, snap-fit, or interference fit engagement.

In some examples, the top cover 646 can provide a platform for load support while protecting various components beneath. In some cases, the top cover 646 may form the primary load-bearing surface of the load support 630, allowing loads to be placed directly on the top cover 646 during material handling operations. In some examples, the top cover 646 can be configured to directly support a load. In some examples, positioning the batteries 624 on the load support 630 via the battery support assembly 642 can improve weight distribution of the material handling vehicle 600, such as by distributing battery mass forward of the vehicle body 602 to provide counterweight for loads supported on the load support 630 and enhance stability during operation.

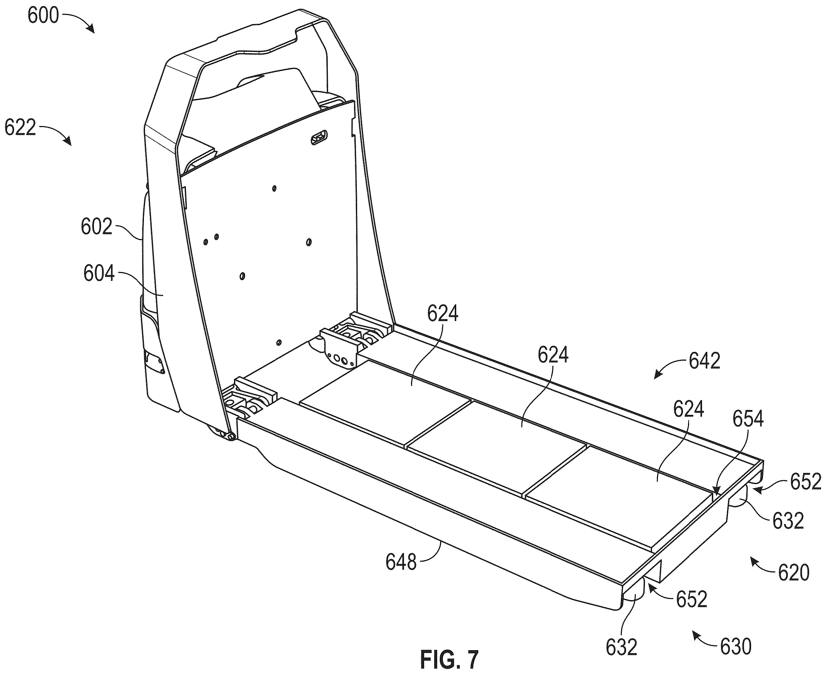

Referring to FIGS. 7-9, the casing 648 can include various geometric structures that are configured to engage with and accommodate various components of the material handling vehicle 600 in a compact arrangement. For example, the casing 648 includes channels 652 that extend longitudinally between the front side 620 and the rear side 622 and open downwardly. Each of the channels 652 can receive and at least partially enclose the corresponding forks 632, such that the casing 648 is at least partially supported by the forks 632. In some examples, the casing 648 can be configured to at least partially cover the pair of forks 632. In some examples, the casing 648 can be fitted over the forks 632 from above or be slid over the forks 632 (e.g., from the front side 620).

Further, the casing 648 includes a cavity 654 that extends longitudinally between the front side 620 and the rear side 622 and is positioned between the channels 652. The cavity 654 can open upwardly and be configured to receive the batteries 624. In some examples, the cavity 654 can be positioned between the pair of channels 652 and configured to receive one or more batteries 624 providing power to the material handling vehicle 600. In the illustrated example, the cavity 654 houses three batteries 624 arranged in a side-by-side configuration, although other configurations are possible, such as one, two, four, five, or more batteries, or different arrangements such as vertically-stacked configurations. In some examples, the cavity 654 can include a depth that accommodates the batteries 624 while maintaining a low profile relative to an upper surface of the forks 632, allowing the top cover 646 to provide a substantially flat load-bearing surface. In some examples, the cavity 654 can extend longitudinally and open upwardly to receive the one or more batteries 624.

In some examples, the batteries 624 can be removed from the casing 648, or the entire battery support assembly 642 including the casing 648, the batteries 624, and the top cover 646 can be removed for replacement, providing modular serviceability and simplified battery replacement. In some examples, the one or more batteries 624 can be removable from the cavity 654, or the casing 648 including the one or more batteries 624 and the top cover 646 can be removable as an assembly from the pair of forks 632. In some examples, the casing 648 can be configured to be removably positioned over the pair of forks 632. In some examples, the material handling vehicle 600 can include electrical connectors that connect with the vehicle body 602 to provide power to the powertrain (e.g., similar to the powertrain 110 of FIG. 1), allowing the batteries housed within the casing 648 to supply electrical power for operation of the material handling vehicle 600.

In some implementations, devices or systems disclosed herein can be utilized, manufactured, or installed using methods embodying aspects of the disclosed technology. Correspondingly, any description herein of particular features, capabilities, or intended purposes of a device or system is generally intended to include disclosure of a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the disclosed technology, of the utilized features and implemented capabilities of such device or system.

### FURTHER EXAMPLES

Example 1: A material handling vehicle, comprising: a vehicle body; a powertrain arranged within the vehicle body; a load support extending from the vehicle body to support a load; and a battery arranged within the load support, the battery to provide electrical power to the powertrain of the material handling vehicle.

Example 2: The material handling vehicle of Example 1, wherein the load support includes a fork extending away from the vehicle body.

Example 3: The material handling vehicle of Example 2, wherein the fork defines a cavity configured to receive and secure the battery.

Example 4: The material handling vehicle of Example 3, further comprising: a cover configured to slide over the fork to selectively enclose the cavity.

Example 5: The material handling vehicle of any one of Examples 1-4, wherein the load support includes a pair of laterally-spaced forks extending away from the vehicle body.

Example 6: The material handling vehicle of Example 5, further comprising: a casing configured to slide over the forks to form a platform to support a load.

Example 7: The material handling vehicle of Example 6, wherein the battery is arranged within the casing between the forks of the material handling vehicle.

Example 8: The material handling vehicle of any one of Examples 5-7, wherein each of the pair of forks defines a cavity configured to receive and secure a first battery and a second battery, respectively.

Example 9: The material handling vehicle of Example 8, wherein the first and second batteries are connected via a bus bar to form a battery assembly.

Example 10: The material handling vehicle of any one of Examples 1-9, wherein the battery is a lithium-ion type battery.

Example 11: A method of replacing a battery for a material handling vehicle, the method comprising: providing a material handling vehicle, the material handling vehicle including a vehicle body, a powertrain within the vehicle body, a load support extending from the vehicle body, and the load support including one or more forks; removing a first battery from within the load support, the first battery having a first charge level; installing a second battery within the load support, the second battery having a second charge level that is greater than the first charge level of the first battery; and establishing an electrical connection between the powertrain and the battery to power the material handling vehicle.

Example 12: The method of Example 11, wherein the load support includes a casing that is configured to receive and secure the battery.

Example 13: The method of Example 12, wherein the casing is configured to at least partially cover the one or more forks.

Example 14: The method of any one of Example 12 or Example 13, further comprising: before removing the first battery within the casing, removing a cover away from the casing, wherein the cover is configured to directly support a load.

Example 15: The method of any one of Examples 11-14, wherein installing the second battery includes one or more of: sliding a casing over the one or more forks, the casing including the second battery; or installing a second set of forks on the material handling vehicle, the second battery integrated into the second set of forks.

Example 16: A load support assembly for a material handling vehicle, comprising: a pair of forks configured to extend from a vehicle body of the material handling vehicle; a casing configured to at least partially cover the pair of forks, the casing including: a pair of channels extending longitudinally, each channel configured to receive and at least partially enclose a respective one of the pair of forks; and a cavity positioned between the pair of channels and configured to receive one or more batteries providing power to the material handling vehicle; a cover configured to be supported on the casing over the cavity.

Example 17: The load support assembly of Example 16, wherein the cover is configured as a load-bearing surface to support a load during material handling operations of the material handling vehicle.

Example 18: The load support assembly of Example 16 or Example 17, wherein the cavity extends longitudinally and opens upwardly to receive the one or more batteries.

Example 19: The load support assembly of any one of Examples 16-18, wherein the casing is configured to be removably positioned over the pair of forks.

Example 20: The load support assembly of any one of Examples 16-19, wherein the one or more batteries are removable from the cavity, or the casing including the one or more batteries and the cover are removable as an assembly from the pair of forks.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

As used herein, unless otherwise defined or limited, directional terms are used for convenience of reference for discussion of particular figures or examples. For example, references to downward (or other) directions or top (or other) positions may be used to discuss aspects of a particular example or figure, but do not necessarily require similar orientation or geometry in all installations or configurations.

Additionally, unless otherwise specified or limited, the terms "about" and "approximately," as used herein with respect to a reference value, refer to variations from the reference value of plus or minus 15 percent or less, inclusive of the endpoints of the range. Similarly, the term "substantially equal" (and the like) as used herein with respect to a reference value refers to variations from the reference value of less than plus or minus 30 percent, inclusive. Where specified, "substantially" can indicate in particular a variation in one numerical direction relative to a reference value. For example, "substantially less" than a reference value (and the like) indicates a value that is reduced from the reference value by 30 percent or more, and "substantially more" than a reference value (and the like) indicates a value that is increased from the reference value by 30 percent or more.

The previous description of the disclosed embodiments is provided to enable any person skilled in the art to make or use the disclosed technology. Given the benefit of this disclosure, various modifications to these embodiments will be readily apparent to those skilled in the art, and the principles defined herein may be applied to other embodiments without departing from the spirit or scope of the disclosed technology. Thus, the disclosed technology is not intended to be limited to the embodiments shown herein but is to be accorded the widest scope consistent with the principles and novel features disclosed herein.

## Claims

1. A material handling vehicle (100), comprising:
a vehicle body (102);
a powertrain (110) arranged within the vehicle body (102);
a load support (130) extending from the vehicle body (102) to support a load; and
a battery (150) arranged within the load support (130), the battery (150) to provide electrical power to the powertrain (110) of the material handling vehicle (100).

2. The material handling vehicle (100) of claim 1, wherein the load support (130) includes a fork (132) extending away from the vehicle body (102).

3. The material handling vehicle (400, 500, 600) of claim 2, wherein the fork (432, 532, 632) defines a cavity (434, 534, 654) configured to receive and secure the battery (150).

4. The material handling vehicle (400, 600) of claim 3, further comprising:
a cover (436, 646) configured to slide over the fork (432) to selectively enclose the cavity (434).

5. The material handling vehicle (300, 500) of claim 1, wherein the load support (330, 530) includes a pair of laterally-spaced forks (332, 532) extending away from the vehicle body (302, 502).

6. The material handling vehicle (300, 500) of claim 5, further comprising:
a casing (360) configured to slide over the forks (332, 532) to form a platform to support a load.

7. The material handling vehicle (300, 500) of claim 6, wherein the battery (352, 526) is arranged within the casing (360) between the forks (332, 532) of the material handling vehicle (300, 500).

8. The material handling vehicle (500) of any of the claims 5-7, wherein each of the pair of forks (532) defines a cavity (534) configured to received and secure a first battery (526) and a second battery (528), respectively.

9. The material handling vehicle (500) of claim 8, wherein the first battery (526) and the second battery (528) are connected via a bus bar (544) to form a battery assembly (525).

10. The material handling vehicle (100) of any of the claims above, wherein the battery (150) is a lithium-ion type battery.

11. A method of replacing a battery (150) for a material handling vehicle (100), the method comprising:
providing a material handling vehicle (100) that includes a vehicle body (102), a powertrain within the vehicle body (102), a load support (130) extending from the vehicle body (102), and the load support (130) including one or more forks (132);
removing a first battery (150) from within the load support, the first battery (150) having a first charge level;
installing a second battery (150) within the load support, the second battery (150) having a second charge level that is greater than the first charge level of the first battery (150); and
establishing an electrical connection between the powertrain (110) and the battery (150) to power the material handling vehicle (100).

12. The method of claim 11, wherein the load support (330) includes a casing (360) that is configured to receive and secure the battery (352).

13. The method of claim 12, wherein the casing (360) is configured to at least partially cover the one or more forks (332).

14. The method of claim 12 or 13, further comprising:
before removing the first battery (624) within the casing (648), removing a cover (646) away from the casing (648),
wherein the cover (646) is configured to directly support a load.

15. The method of any of the claims 11 to 14, wherein installing the second battery (624) includes one or more of:
sliding a casing (648) over the one or more forks (632), the casing (648) including the second battery (624); or
installing a second set of forks (632) on the material handling vehicle (600), the second battery (624) integrated into the second set of forks.
